# EUROPEAN PATENT SPECIFICATION

(11) **EP 3 930 395 B1**
(45) Date of publication and mention of the grant of the patent: **13.09.2023**
(21) Application number: 19922312.4
(22) Date of filing: 04.04.2019
(51) Int. Cl.: H04W 72/04, H04W 28/02

(54) **METHOD FOR WIRELESS COMMUNICATION AND TERMINAL DEVICE**
VERFAHREN ZUR DRAHTLOSEN KOMMUNIKATION UND ENDGERÄTEVORRICHTUNG
PROCÉDÉ DE COMMUNICATION SANS FIL ET DISPOSITIF TERMINAL

(43) Date of publication of application: 29.12.2021
(73) Proprietor: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); ZHAO, Zhenshan, Dongguan, Guangdong 523860 (CN); LIN, Huei-Ming, South Yarra, Victoria 3141 (AU)
(74) Representative: Novagraaf Technologies
(86) International application number: PCT/CN2019/081585
(87) International publication number: WO 2020/199218

(56) References cited:
- EP-A1- 2 922 360
- WO-A1-2016/181094
- CN-A- 107 333 334
- CN-A- 108 633 074
- HUAWEI ET AL: "SR procedure and configuration for NR SL Mode 1", 3GPP DRAFT; R2-1904093 SR PROCEDURE AND CONFIGURATION FOR MODE 1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG2, no. Xi'an, China; 20190408 - 20190412 29 March 2019 (2019-03-29), XP051693325, Retrieved from the Internet: URL:http://www.3gpp.org/ftp/tsg%5Fran/WG2% 5FRL2/TSGR2%5F105bis/Docs/R2%2D1904093%2Ez ip [retrieved on 2019-03-29]
- CATT: "Consideration on Uu MAC due to V2X transmission", 3GPP DRAFT; R2-1813730, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chengdu, China; 20181008 - 20181012 28 September 2018 (2018-09-28), XP051523225, Retrieved from the Internet: URL:http://www.3gpp.org/ftp/tsg%5Fran/WG2% 5FRL2/TSGR2%5F103bis/Docs/R2%2D1813730%2Ez ip [retrieved on 2018-09-28]
- HUAWEI et al.: "Potential RAN2 Impacts on gNB Scheduled Resource Allocation for NR V2X", 3GPP TSG-RAN WG2 # 104 R2-1816518, 16 November 2018 (2018-11-16), XP051480472, DOI: 20191216163644X
- SAMSUNG: "Discussion on Uu-Based Sidelink Resource Allocation and Configuration", 3GPP TSG RAN WG1 #95 R1-1812989, 16 November 2018 (2018-11-16), XP051554968, DOI: 20191216163844A
- CATT: "Consideration on Uu MAC Due to V2X Transmission", 3GPP TSG-RAN WG2 Meeting #103bis R2-1813730, 12 October 2018 (2018-10-12), XP051523225, DOI: 20191216163953A
- HUAWEI ET AL: "Potential RAN2 impacts on gNB scheduled resource allocation for NR V2X", 3GPP DRAFT; R2-1816518, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 2 November 2018 (2018-11-02), pages 1-5, XP051480472, Retrieved from the Internet: URL:http://www.3gpp.org/ftp/tsg%5Fran/WG2% 5FRL2/TSGR2%5F104/Docs/R2%2D1816518%2Ezip [retrieved on 2022-09-22]

## Description

### TECHNICAL FIELD

Embodiments of the present disclosure relate to the field of communications, and in particular to a method and terminal device for wireless communication.

### BACKGROUND

In a cellular communication system, a terminal device may trigger a buffer state report (BSR) to request an uplink resource from a network device. In the absence of an uplink grant (UL grant), the terminal device may trigger a scheduling request (SR) to request the uplink resource from the network device.

Device-to-device (D2D) communication is a sidelink transmission technology based on a D2D technology. A vehicle to everything system is a system based on the D2D technology. In contrast to the traditional cellular communication system in which the network device is required for data transmission and reception, a terminal-to-terminal direct communication may be adopted in the vehicle to everything system, thereby realizing higher spectrum efficiency and lower transmission latency.

In a communication system that supports the sidelink transmission technology, the terminal device needs the sidelink resource for sidelink communication. Therefore, for the terminal device, how to request the sidelink resource is an urgent problem to be solved. Related art can also be found in EP 2922360A1, XP051693325 and XP051523225.

### SUMMARY

The invention is set out in the appended set of claims. Embodiments of the present disclosure provide a method and terminal device for wireless communication. The terminal device may trigger a sidelink BSR when a sidelink data transmission is needed, and further determine whether to trigger a SR to request a sidelink resource based on first information.

In a first aspect, there is provided a method for wireless communication, including: triggering, by a first terminal, a sidelink buffer state report (BSR), and the sidelink BSR is used for requesting a sidelink resource for first sidelink data to be sent; and determining, by the first terminal, whether to trigger a scheduling request (SR) used for requesting the sidelink resource according to first information.

In a second aspect, there is provided a terminal device configured to perform the method in the first aspect or any of the implementations thereof. Specifically, the terminal device includes functional units configured to perform the method in the first aspect or any of the implementations thereof.

Based on the above technical solutions, the terminal device may trigger the sidelink BSR when a sidelink data transmission is needed, and further determine whether to trigger the SR based on first information, which facilitates to ensure that the requested sidelink resource meets actual transmission demands.

### BRIEF DESCRIPTION OF THE DRAWINGS

FIG. 1 is a schematic diagram of a communication system architecture provided by an embodiment of the present disclosure.
FIG. 2 is a schematic diagram of a method for wireless communication provided by an embodiment of the present disclosure.
FIG. 3 is a schematic block diagram of a terminal device provided by an embodiment of the present disclosure.
FIG. 4 is a schematic block diagram of a communication device according to another embodiment of the present disclosure.
FIG. 5 is a schematic block diagram of a chip provided by an embodiment of the present disclosure.

### DETAILED DESCRIPTION

The technical solutions in the embodiments of the present disclosure will be described below with reference to the accompanying drawings in the embodiments of the present disclosure. Obviously, the described embodiments are part of the embodiments of the present disclosure, but not all of the embodiments. Based on the embodiments in the present disclosure, all other embodiments obtained by a person of ordinary skill in the art without creative efforts shall fall within the protection scope of the present disclosure.

It should be understood that technical solutions of the embodiments of the present disclosure may be applied to a Device to Device (D2D) communication system, for example, a vehicle to everything system based on long term evolution (LTE) for D2D communication, or a new radio vehicle to everything (NR-V2X) system. Unlike a traditional LTE system in which communication data between terminals is received or sent through a network device (for example, a base station), the vehicle to everything system adopts a terminal-to-terminal direct communication, and it has higher spectrum efficiency and lower transmission latency.

Optionally, a communication system which is based on by the vehicle to everything system may be a Global System for Mobile communications ("GSM" for short) system, a Code Division Multiple Access ("CDMA" for short) system, a Wideband Code Division Multiple Access ("WCDMA" for short) system, a General Packet Radio Service ("GPRS" for short), a LTE system, an LTE Frequency Division Duplex ("FDD" for short) system, an LTE Time Division Duplex ("TDD" for short), a Universal Mobile Telecommunication System ("UMTS" for short), a Worldwide Interoperability for Microwave Access ("WiMAX" for short) communications system, a 5G new radio ("NR " for short) system, or the like.

The terminal device in the embodiments of the present disclosure may be a terminal device capable of implementing D2D communication. For example, it may be a vehicle-mounted terminal device, a terminal device in a 5G network, or a terminal device in a public land mobile network (PLMN) that will evolve in the future, which is not limited by the embodiments of the present disclosure.

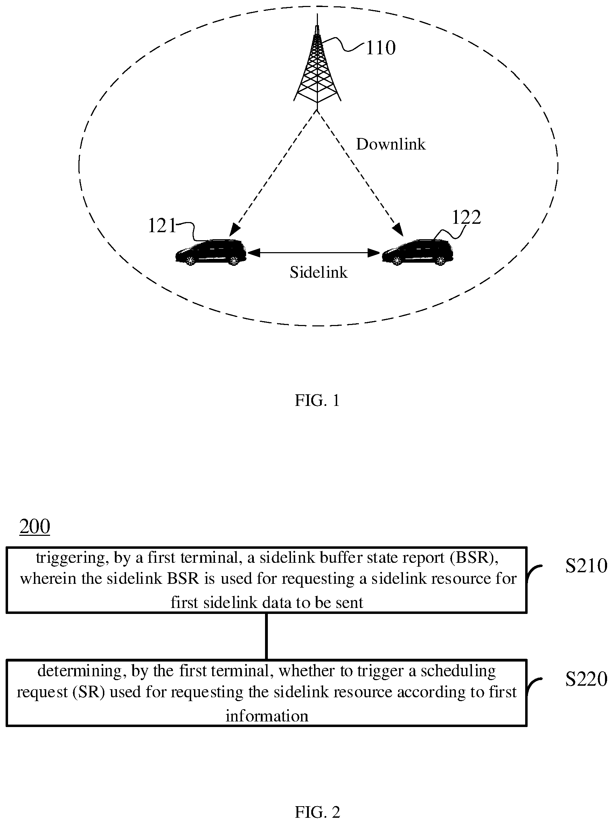

FIG. 1 is a schematic diagram of an application scenario of an embodiment of the present disclosure. FIG. 1 exemplarily illustrates one network device and two of UEs. Optionally, the wireless communication system 100 in the embodiment of the present disclosure may include a plurality of network devices, and a coverage range of each network device may include other numbers of UEs, which is not limited by the embodiment of the present disclosure.

Optionally, the wireless communication system may also include other network entities such as a mobile management entity (MME), a serving gateway (S-GW), a packet data network gateway (P-GW), etc. Entity, or, the wireless communication system may also include other network entities such as a session management function (SMF), an unified data management (UDM), an authentication server function (AUSF), which is not limited by the embodiment of the present disclosure.

In this vehicle to everything system, the terminal device may perform communication in mode A and mode B.

Specifically, the terminal device 121 and the terminal device 122 may communicate in a D2D communication mode. When performing the D2D communication, the terminal device 121 and the terminal device 122 directly communicate through a D2D link, that is, a sidelink (SL). In the mode A, the transmission resources of the terminal device are assigned by the base station, and the terminal device performs data transmission on the SL based on the resources assigned by the base station. The base station may allocate resources for a single transmission for the terminal device, or may allocate resources for semi-persistent static transmission for the terminal device. In the mode B, the terminal device uses the transmission mode of sensing and reservation, and the terminal device autonomously selects the transmission resources from the SL resources. Specifically, the terminal device obtains a set of available resources from the resource pool by sensing, and randomly selects a resource from the set of available resources for data transmission.

It should be understood that the above-mentioned mode A and mode B are only exemplary descriptions of two transmission modes, and other transmission modes may be defined. For example, mode C and mode D are introduced in NR-V2X. The mode C indicates that the sidelink transmission resources of the terminal device are allocated by the base station, and the mode D indicates that the sidelink transmission resources of the terminal device are selected by the terminal

D2D communication may refer to a vehicle to vehicle ("V2V" for short) communication or a vehicle to everything (V2X) communication. In the V2X communication, X may generally refer to any device with wireless receiving and sending capabilities, such as but not limited to slow-moving wireless devices, fast-moving vehicle-mounted devices, or any network control node with wireless transmission and reception capabilities. It should be understood that the embodiments of the present disclosure is mainly applied to a V2X communication scenario, but can also be applied to any other D2D communication scenario, which is not limited in the embodiments of the present disclosure.

It should be understood that the terms "system" and "network" herein may often be interchanged herein. The term "and/or" herein is only an association relationship that describes associated objects, and represents that there may be three relationships. For example, A and/or B may represent that: A exists alone, A and B exist simultaneously, and B exists alone. In addition, the character "/" herein generally indicates that front and back associated objects are in an "or" relationship.

FIG. 2 is a schematic flowchart of a method for wireless communication according to an embodiment of the present disclosure. For example, the method may be executed by a terminal device in the vehicle to everything system, such as the terminal device 121 or the terminal device 122. As shown in FIG. 2, the method 200 includes:
in S210, a first terminal triggers a sidelink buffer state report (BSR), and the sidelink BSR is used for requesting a sidelink resource for first sidelink data to be sent; and
in S220, the first terminal determines whether to trigger a scheduling request (SR) used for requesting the sidelink resource according to first information.

Specifically, when the first terminal needs to send sidelink data to other terminals, such as a second terminal, it needs the sidelink resource. If there is no sidelink resource, it needs to request the sidelink resource from the network device. In this case, the terminal device may trigger the sidelink BSR, which is used for requesting sidelink resource for sidelink data transmission.

Optionally, in the embodiments of the present disclosure, the first sidelink data to be sent may be a logical channel that triggers the sidelink BSR, or a logical channel group (LCG) that triggers the sidelink BSR.

In other words, when data in the logical channel or the logical channel group needs to be sent to other terminal devices, the first terminal may trigger the sidelink BSR.

It should be understood that, in the embodiments of the present disclosure, the first terminal triggers the sidelink BSR, and the sidelink BSR is in a pending state at this time, that is, the first terminal is ready to send but has not sent the sidelink B SR to the network device.

Optionally, the first sidelink data includes data in a data radio bearer (DRB) and/or data in a signaling radio bearer (SRB).

Optionally, in some embodiments, the SRB may be used for carrying a radio resource control (RRC) signaling for sidelink and/or a sidelink PC5 signaling (PC5-S).

Optionally, in some embodiments, a QoS attribute of the SRB is configured by a network device or is pre-configured.

Optionally, the QoS attribute of the SRB may include priority, and optionally, may also include other attributes such as latency.

Optionally, in some embodiments, the first terminal may determine whether to trigger the SR according to the first information when the sidelink BSR is triggered, so as to request the sidelink resource through the SR.

It should be understood that in the embodiments of the present disclosure, if it is determined to trigger the SR, the sidelink BSR may not be sent. After the first terminal sends the SR to the network device, the network device may allocate the sidelink resource to the first terminal. If the sidelink resource cannot meet a transmission demand of the sidelink data, for example, if a size of the sidelink resource is not enough to transmit the first sidelink data to be sent, the first terminal may further trigger the sidelink BSR to request the sidelink resource from the network device through the sidelink BSR

Optionally, in some embodiments, if the first terminal determines not to trigger SR, for example, no uplink grant resource is configured for the first terminal, the first terminal may also initiate a random access process to request the uplink grant resource from the network device.

In the following, in conjunction with specific embodiments, a SR trigger mode is described. Some examples below, although not being a part of the invention, are provided for better understanding of the present invention.

Optionally, as an example, denoted as example one, the first information may include:
whether the first terminal has an available sidelink resource for initial transmission, and/or whether the available sidelink resource for the initial transmission meets a transmission demand of the first sidelink data.

For example, if the first terminal is not configured with the available sidelink resource for the initial transmission, the first terminal may determine to trigger the SR, and further send the SR to the network device.

For another example, if the first terminal is configured with the available sidelink resource for the initial transmission, the first terminal may determine not to trigger the SR.

Therefore, the first terminal may determine whether to trigger the SR according to whether there is the available sidelink resource for the initial transmission (i.e., a new transmission).

In other embodiments, if the first terminal is configured with the available sidelink resource for the initial transmission, the first terminal may further determine whether to trigger SR according to whether the available sidelink resource meets the transmission demand of the first sidelink resource. In this way, it is helpful to ensure that the requested sidelink resource may meet the transmission demand of the sidelink data.

For example, if the first terminal is configured with the available sidelink resource for the initial transmission, but if the available sidelink resource cannot meet the transmission demand of the first sidelink data, the first terminal may determine to trigger the SR, and further send the SR to the network device.

Alternatively, if the first terminal is configured with the available sidelink resource for the initial transmission, but if the available sidelink resource can meet the transmission demand of the first sidelink data to be sent, the first terminal may determine not to trigger the SR, and use the available sidelink resource to send the first sidelink data.

As an example and not a limitation, the available sidelink failing to meet the transmission demand of the first sidelink data includes at least one of the following:
the available sidelink resource and the first sidelink data do not meet a first mapping relationship;
the available sidelink resource does not meet a latency requirement of the first sidelink data; and
the size of the available sidelink resource is not enough to transmit the first sidelink data.

Therefore, in the embodiments of the present disclosure, in a case where the first terminal is configured with the available link resource, the first terminal may further determine whether to trigger the SR according to whether the attribute of the available link resource meets an actual transmission demand, so that the SR is triggered, and the sidelink resource is further requested through the SR in a case where the available link resource does not meet the actual transmission demand, which is beneficial to ensure that the sidelink resource that meets the actual transmission demand is requested.

It should be understood that, in the embodiments of the present disclosure, the case where the available sidelink resource cannot meet the transmission demand of the first sidelink data is only an example, and the transmission demand of the sidelink data may also include other parameters that affect a transmission performance, such as, a quality-of-service (QoS) requirement, a priority, a reliability demand, etc., which are not specifically limited in the embodiments of the present disclosure.

Optionally, in some embodiments, the first mapping relationship may be a mapping relationship between sidelink data that triggers the sidelink BSR and an attribute of the sidelink resource.

For example, the first mapping relationship may be a relationship between the logical channel or the logical channel group that triggers the sidelink BSR and the attribute of the sidelink resource.

That is to say, the sidelink data that triggers the sidelink BSR requires the sidelink resource corresponding to a specific attribute. If the attribute of the available sidelink resource is different from the attribute of the sidelink resource mapped by the first sidelink data, the available sidelink resource and the first sidelink data do not meet the first mapping relationship. In this case, the first terminal may trigger the SR, and further request the sidelink resource through the SR, which facilitates to request the sidelink resource that meets the specific attribute of the first mapping relationship.

Optionally, in some embodiments, if the first terminal is configured with the available sidelink resource for the initial transmission, the first terminal may further determine whether to trigger the SR based on a packing condition of current data. For example, if the data has been packed, that is, the BSR can no longer be assembled into the data packet, in this case, the first terminal may trigger the SR. Specifically, it may send a physical uplink control channel (PUCCH) to the network device, and send the SR to the network device through the PUCCH.

Optionally, as another embodiment, denoted as embodiment two, the first information may also include at least one of the following:
whether the first terminal has an available physical uplink control channel (PUCCH) resource, and/or information on conflict data of the SR.

Optionally, the PUCCH resource is a PUCCH resource mapped by the logical channel or the logical channel group corresponding to the first sidelink data.

Hereinafter, in conjunction with the following examples and embodiments, a specific implementation of the example will be described.

Example three: the first terminal determines whether to trigger the SR according to whether the first terminal is configured with an available PUCCH resource.

The SR may be sent through the PUCCH resource. In some specific embodiments, the first terminal determines whether to trigger the SR according to whether the first terminal is configured with the available PUCCH resource. For example, in a case where the first terminal is configured with the available PUCCH resource, the first terminal determines to trigger the SR, or in a case where the first terminal is not configured with the available PUCCH resource, the first terminal determines not to trigger the SR.

Embodiment four: the first terminal may also determine whether to trigger the SR according to the information on the conflict data of the SR.

The information on the conflict data of the SR includes at least one of the following:
whether there is uplink data to be sent that conflicts with the SR;
a transmission demand of the uplink data that conflicts with the SR;
whether there is sidelink data to be sent that conflicts with the SR; and
a transmission demand of sidelink data that conflicts with the SR.

Generally speaking, the first terminal may only send the uplink data or the sidelink data at a same time point. Therefore, in the embodiments of the present disclosure, the first terminal may determine whether to trigger SR according to whether there is the uplink data and/or the sidelink data to be sent that conflict with the SR at present. Alternatively, in the case where there is the uplink data and/or sidelink data to be sent, the first terminal may further combine an attribute of the uplink data and/or the sidelink data to be sent to determine whether to trigger SR.

In conjunction with the following examples and embodiments, a specific implementation of the embodiment four will be described.

Embodiment five: the first terminal determines whether to trigger the SR according to whether there is the uplink data to be sent that conflicts with the SR.

For example, the first terminal may determine not to trigger the SR when there is the uplink data to be sent that conflicts with the SR, or determine to trigger the SR when there is no uplink data to be sent that conflicts with the SR.

Example six: the first terminal determines whether to trigger the SR according to the importance level of the uplink data to be sent that conflicts with the SR.

For example, the first terminal may determine to trigger the SR when the importance level of the uplink data is lower than the importance level of the first sidelink data, that is, prioritize the transmission of the SR to request the sidelink resource of the first sidelink data. In this case, it may be considered that the importance level of the SR is higher than the importance level of the uplink data, or in other words, the priority of the SR is higher than the priority of the uplink data.

For another example, the first terminal may determine to trigger the SR when the importance level of the uplink data is lower than a specific importance level threshold, that is, prioritize the transmission of the SR to request the sidelink resource of the first sidelink data.

The importance level of the uplink message in the random access process may be considered to be high. In some specific embodiments, the first terminal may determine to trigger the SR when the uplink data is not the uplink message in the random access process.

Optionally, the uplink message in the random access process is a message 3 (MSG3) for requesting the uplink resource in the random access process.

Embodiment seven: the first terminal determines whether to trigger the SR according to the transmission demand of the uplink data to be sent that conflicts with the SR.

For example, if the transmission demand of the uplink data is higher than the transmission demand of the first sidelink data, that is, transmission of the uplink data needs to be prioritized. In this case, the priority of the SR may be considered lower than the priority of the uplink data, the first terminal may determine not to trigger the SR, and prioritize the transmission of the uplink data.

Alternatively, if the transmission demand of the uplink data is lower than the transmission demand of the first sidelink data, that is, transmission of the first sidelink data needs to be prioritized. In this case, the priority of the SR can be considered higher than that of the uplink data. The first terminal may determine to trigger the SR, and prioritize the transmission of the SR to request the sidelink resource for sending the first sidelink data.

For another example, if the transmission demand of the uplink data is lower than a transmission demand threshold, in this case, it can be considered that the priority of the SR is higher than the priority of the uplink data, and the first terminal may determine to trigger the SR, and prioritize the transmission of the SR to request the sidelink resource for sending the first sidelink data.

Alternatively, if the transmission demand of the uplink data is higher than the specific transmission demand threshold, in this case, it can be considered that the priority of the SR is lower than the priority of the uplink data, and the first terminal may determine not to trigger the SR and prioritize the transmission of the uplink data.

As an example and not a limitation, the transmission demand may be a latency requirement, a QoS requirement, a reliability requirement, etc. Correspondingly, the transmission demand threshold may be a latency requirement threshold, a QoS requirement threshold, a reliability requirement threshold, etc.

Optionally, in some embodiments, the transmission demand of the uplink data being lower than the transmission demand of the first sidelink data includes at least one of the following:
a priority of the uplink data is lower than a priority of the first sidelink data;
a quality of service (QoS) requirement of the uplink data is lower than a QoS requirement of the first sidelink data;
the QoS requirement of the uplink data is a QoS requirement in a first QoS requirement set; and
a latency requirement of the uplink data is lower than a latency requirement of the first sidelink data.

Optionally, the first QoS requirement set may be pre-configured or configured by the network device.

For example, the network device may configure one or more QoS requirements to form the first QoS requirement set. Optionally, the QoS requirement in the first QoS requirement set is lower than a specific QoS requirement threshold.

The QoS requirement in the first QoS requirement set may be regarded as a QoS requirement with lower priority. When the QoS requirement of the uplink data is the QoS requirement in the first QoS requirement set, the first terminal may determine to trigger the SR.

Optionally, in some embodiments, the latency requirement of the uplink data being lower than the latency requirement of the first sidelink data includes: the uplink data does not include voice data.

Therefore, in a case where there is the uplink data that conflicts with the SR, the first terminal may further combine the transmission demand of the uplink data to determine whether to trigger the SR. For example, in the case where the transmission demand of the uplink data is lower than that of the first sidelink data, transmission of the SR is prioritized to request the sidelink resource for the first sidelink data. Alternatively, in the case where the transmission demand of the uplink data is higher than the transmission demand of the first sidelink data, transmission of the uplink data is prioritized to meet the transmission demand of the uplink data first.

Embodiment eight: the first terminal determines whether to trigger the SR according to whether there is the sidelink data to be sent that conflicts with the SR.

For example, the first terminal may determine not to trigger the SR when there is the sidelink data to be sent that conflicts with the SR, or determine to trigger the SR when there is no sidelink data to be sent that conflicts with the SR.

Embodiment nine: the first terminal determines whether to trigger the SR according to the transmission demand of second sidelink data to be sent that conflicts with the SR.

For example, if the transmission demand of the second sidelink data is higher than the transmission demand of the first sidelink data, that is, transmission of the second sidelink data needs to be prioritized. In this case, it may be considered that the priority of the SR is lower than the priority of the second sidelink data, the first terminal may determine not to trigger the SR and prioritize the transmission of the second sidelink data.

Alternatively, if the transmission demand of the second sidelink data is lower than the transmission demand of the first sidelink data, that is, transmission of the first sidelink data needs to be prioritized. In this case, it may be considered that the priority of the SR is higher than the priority of the second sidelink data, the first terminal may determine to trigger the SR and prioritize the transmission of the SR, so as to request the sidelink resource for the first sidelink data.

For another example, if the transmission demand of the second sidelink data is lower than the transmission demand threshold, in this case, it can be considered that the priority of the SR is higher than the priority of the second sidelink data, and the first terminal may determine to trigger the SR, prioritize the transmission of the SR, so as to request the sidelink resource for the first sidelink data.

Alternatively, if the transmission demand of the second sidelink data is higher than the specific transmission demand threshold. In this case, it can be considered that the priority of the SR is lower than the priority of the second sidelink data, and the first terminal may determine not to trigger SR, prioritize the transmission of the second sidelink data, so as to meet the transmission demand of the second sidelink data.

As an example and not a limitation, the transmission demand may be a latency requirement, a QoS requirement, a reliability requirement, etc. Correspondingly, the transmission demand threshold may be a latency requirement threshold, a QoS requirement threshold, a reliability requirement threshold, etc.

Optionally, in some embodiments, the transmission demand of the second sidelink data being lower than the transmission demand of the first sidelink data includes at least one of the following:
a priority of the second sidelink data is lower than a priority of the first sidelink data;
a QoS requirement of the second sidelink data is lower than the QoS requirement of the first sidelink data;
a latency requirement of the second sidelink data is lower than the latency requirement of the first sidelink data;
the QoS requirement of the second sidelink data is a QoS requirement in a second QoS requirement set.

Optionally, the second QoS requirement set is pre-configured or configured by the network device.

For example, the network device may configure one or more QoS requirements to form the second QoS requirement set. Optionally, the QoS requirement in the second QoS requirement set is lower than a specific QoS requirement threshold.

The QoS requirement in the second QoS requirement set can be considered as a QoS requirement with lower priority. When the QoS requirement of the sidelink data is the QoS requirement in the second QoS requirement set, the first terminal may determine to trigger the SR.

Therefore, in the case where there is the second sidelink data that conflicts with the SR, the first terminal may further determine whether to trigger the SR in conjunction with the transmission demand of the second sidelink data. For example, in the case where the transmission demand of the second sidelink data is lower than the transmission demand of the first sidelink data, transmission of the SR prioritized to request the sidelink resource for the first sidelink data. Alternatively, in the case where the transmission demand of the second sidelink data is higher than the transmission demand of the first sidelink data, transmission of the second sidelink data is prioritized to meet the transmission demand of the second sidelink data first.

It should also be understood that the above embodiments may be implemented separately or in combination, which is not limited in the embodiments of the present disclosure. For example, the first terminal may further implement the embodiment four to the embodiment nine when there is the PUCCH resource. For example, when the PUCCH resource is available, the first terminal may further determine whether to trigger the SR based on the information on the conflict data of the SR. For example, the first terminal may determine whether to trigger the SR in conjunction with the important level and the transmission demand of the uplink data that conflicts with the SR. For example, the first terminal may determine to trigger the SR when the uplink data is the uplink message in the random access process, or when the uplink data is not the uplink message in the random access process, the first terminal may further determine whether to trigger the SR in conjunction with the transmission demand of the uplink data, which is not limited in the embodiments of the present disclosure.

It should be noted that the first information may only include the content included in the first information in the example one, or may only include the content included in the first information in the example two, or it may also include the both, which is not limited in the embodiments of the present disclosure.

Therefore, according to the method for wireless communication of the embodiments of the present disclosure, the first terminal may determine whether to trigger the SR based on the available sidelink resource, the available PUCCH resource and the data conflicting with the SR, which facilitates to ensure that when the currently available sidelink resource does not meet the demand, a new sidelink resource is requested through the SR.

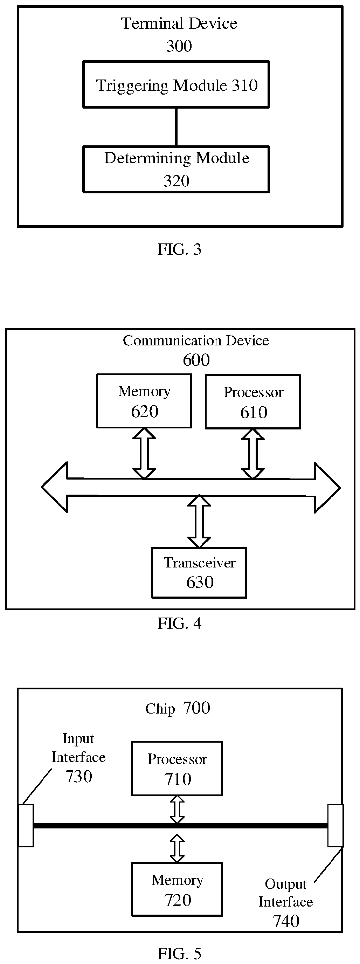

The foregoing describes the method for wireless communication according to the embodiments of the present disclosure from a perspective of the first terminal in conjunction with FIG. 2 in detail. The following describes device embodiments of the present disclosure in detail with reference to FIGS. 3 to 5. It should be understood that the device embodiments and the method embodiments correspond to each other, and similar descriptions may refer to the method embodiments.

FIG. 3 shows a schematic block diagram of a terminal device 300 according to an embodiment of the present disclosure. As shown in FIG. 3, the device 300 includes:
a triggering module 310, configured to trigger a sidelink buffer state report (BSR), and the sidelink BSR is used for requesting a sidelink resource for first sidelink data to be sent; and
a determining module 320, configured to determine whether to trigger a scheduling request (SR) used for requesting the sidelink resource according to first information.

Optionally, in some embodiments, the first information includes:
whether the terminal device has an available sidelink resource for initial transmission, and/or whether the available sidelink resource for the initial transmission meets a transmission demand of the first sidelink data.

Optionally, in some embodiments, the determining module 320 is specifically configured to:
determine to trigger the SR, if at least one of the following conditions is met:
the terminal device does not have the available sidelink resource for the initial transmission;
the terminal device has the available sidelink resource for the initial transmission, and the available sidelink resource fails to meet the transmission demand of the first sidelink data;
the terminal device has the available sidelink resource for the initial transmission, and data has been packed.

Optionally, in some embodiments, the available sidelink failing to meet the transmission demand of the first sidelink data includes at least one of the following:
the available sidelink resource and the first sidelink data do not meet a first mapping relationship;
the available sidelink resource does not meet a latency requirement of the first sidelink data.

Optionally, in some embodiments, the first mapping relationship is a mapping relationship between sidelink data that triggers the sidelink BSR and an attribute of the sidelink resource.

Optionally, in some embodiments, the first information includes:
whether the terminal device has an available physical uplink control channel (PUCCH) resource, and/or information on conflict data of the SR.

Optionally, in some embodiments, the information on the conflict data of the SR includes at least one of the following:
whether there is uplink data to be sent that conflicts with the SR;
an importance level of the uplink data that conflicts with the SR;
a transmission demand of the uplink data that conflicts with the SR;
whether there is sidelink data to be sent that conflicts with the SR; and
a transmission demand of sidelink data that conflicts with the SR.

Optionally, in some embodiments, the determining module 320 is specifically configured to:
determine to trigger the SR, if at least one of the following conditions is met:
the terminal device has the available physical uplink control channel (PUCCH) resource;
the terminal device does not have the uplink data to be sent that conflicts with the SR;
the terminal device has the uplink data to be sent that conflicts with the SR, and the importance level of the uplink data is lower than an importance level of the SR;
the terminal device has the uplink data to be sent that conflicts with the SR, and a transmission demand of the uplink data is lower than a transmission demand of the first sidelink data;
the terminal device does not have second sidelink data to be sent that conflicts with the SR; and
the terminal device has the second sidelink data to be sent that conflicts with the SR, and a transmission demand of the second sidelink data is lower than a transmission demand of the first sidelink data.

Optionally, in some embodiments, the importance level of the uplink data being lower than the importance level of the SR includes:
the uplink data does not include an uplink message in a random access process.

Optionally, in some embodiments, the uplink message is a message 3 for requesting an uplink resource in the random access process.

Optionally, in some embodiments, the transmission demand of the uplink data being lower than the transmission demand of the first sidelink data includes at least one of the following:
a priority of the uplink data is lower than a priority of the first sidelink data;
a quality of service (QoS) requirement of the uplink data is lower than a QoS requirement of the first sidelink data;
the QoS requirement of the uplink data is a QoS requirement in a first QoS requirement set; and
a latency requirement of the uplink data is lower than a latency requirement of the first sidelink data.

Optionally, in some embodiments, the first QoS requirement set is pre-configured or configured by a network device.

Optionally, in some embodiments, the QoS requirement in the first QoS requirement set is lower than a specific QoS requirement threshold.

Optionally, in some embodiments, the latency requirement of the uplink data being lower than the latency requirement of the first sidelink data includes: the uplink data does not include voice data.

Optionally, in some embodiments, the transmission demand of the second sidelink data being lower than the transmission demand of the first sidelink data includes at least one of the following:
a priority of the second sidelink data is lower than a priority of the first sidelink data;
a QoS requirement of the second sidelink data is lower than the QoS requirement of the first sidelink data;
a latency requirement of the second sidelink data is lower than the latency requirement of the first sidelink data;
the QoS requirement of the second sidelink data is a QoS requirement in a second QoS requirement set.

Optionally, in some embodiments, the QoS requirement in the second QoS requirement set is lower than the specific QoS requirement threshold.

Optionally, in some embodiments, the QoS requirement in the second QoS requirement set is lower than a specific QoS requirement threshold.

Optionally, in some embodiments, the PUCCH resource is a PUCCH resource mapped by a logical channel or a logical channel group corresponding to the first sidelink data.

Optionally, in some embodiments, the first sidelink data that triggers the sidelink BSR includes at least one of the following:
a logical channel that triggers the sidelink BSR, and a logical channel group that triggers the sidelink BSR.

Optionally, in some embodiments, the first sidelink data includes data in a data radio bearer (DRB), and/or data in a signaling radio bearer (SRB).

Optionally, in some embodiments, the SRB is used for carrying a radio resource control (RRC) signaling for sidelink and/or a sidelink PC5 signaling (PC5-S).

Optionally, in some embodiments, a QoS attribute of the SRB is configured by the network device or is pre-configured.

Optionally, the QoS attribute of the SRB may include priority, and optionally, may also include other attributes such as latency.

It should be understood that the terminal device 300 according to the embodiments of the present disclosure may correspond to the first terminal in the method embodiments of the present disclosure, and the foregoing and other operations and/or functions of the individual units in the terminal device 300 are respectively intended to realize the corresponding process of the first terminal in the method 200 shown in FIG. 2, and for the sake of brevity, details are not described herein again.

FIG. 4 is a schematic structural diagram of a communication device 600 according to an embodiment of the present disclosure. The communication device 600 shown in FIG. 4 includes a processor 610. The processor 610 may invoke a computer program from a memory and run the computer program, to implement the method in the embodiments of the present disclosure.

Optionally, as shown in FIG. 4, the communication device 600 may further include a memory 620. The processor 610 may invoke the computer program from the memory 620 and run the computer program, to implement the method in the embodiments of the present disclosure.

The memory 620 may be a component independent of the processor 610, or may be integrated into the processor 610.

Optionally, as shown in FIG. 4, the communication device 600 may further include a transceiver 630. The processor 610 may control the transceiver 630 to communicate with another device, and specifically, the transceiver 630 may transmit information or data to another device, or receive information or data transmitted by another device.

The transceiver 630 may include a transmitter and a receiver. The transceiver 630 may further include an antenna. There may be one or more antennas.

Optionally, the communication device 600 may be the first terminal in the embodiments of the present disclosure, and the communication device 600 can implement corresponding procedures implemented by the first terminal in various methods in the embodiments of the present disclosure. For brevity, details are not described herein again.

FIG. 5 is a schematic structural diagram of a chip according to an embodiment of the present disclosure. The chip 700 shown in FIG. 5 includes a processor 710. The processor 710 may invoke a computer program from a memory and run the computer program, to implement the method in the embodiments of the present disclosure.

Optionally, as shown in FIG. 5, the chip 700 may further include a memory 720. The processor 710 may invoke the computer program from the memory 720 and run the computer program, to implement the method in the embodiments of the present disclosure.

The memory 720 may be a component independent of the processor 610, or may be integrated into the processor 710.

Optionally, the chip 700 may further include an input interface 730. The processor 710 may control the input interface 730 to communicate with another device or chip, and specifically, the input interface 730 may obtain information or data transmitted by another device or chip.

Optionally, the chip 700 may further include an output interface 740. The processor 710 may control the output interface 740 to communicate with another device or chip, and specifically, the output interface 740 may output information or data to another device or chip

Optionally, the chip may be applied in the first terminal according to embodiments of the present disclosure, and the chip can implement corresponding procedures implemented by the first terminal in various methods in the embodiments of the present disclosure. For brevity, details are not described herein again.

It should be noted that, the chip mentioned in the embodiments of the present disclosure may also be referred to as a system-level chip, a system chip, a chip system, a system on chip, or the like.

It should be understood that, the processor of the embodiments of the present disclosure may be an integrated circuit chip, has a signal processing capability, the steps of the foregoing method embodiment may be implemented by using a hardware integrated logic circuit in the processor and/or implemented by using an instruction in a software form. The foregoing processor may be a general purpose processor, a digital signal processor (DSP), a field programmable gate array (FPGA), an application specific integrated circuit (ASIC) or another programmable logic device, a transistor logic device, or a discrete hardware component. The foregoing general purpose processor may be a microprocessor, or may be any conventional processor, or the like. Steps of the methods disclosed with reference to the embodiments of the present disclosure may be directly executed and completed by means of a hardware decoding processor, or may be executed and completed by using a combination of hardware and software modules in the decoding processor. The software module may be located in a mature storage medium in the field, such as a random access memory, a flash memory, a read-only memory, a programmable read-only memory, an electrically-erasable programmable memory, or a register. The storage medium is located in the memory, and the processor reads information in the memory and completes the steps in the foregoing method embodiments in combination with hardware of the processor.

It should be understood that, the memory in the embodiments of the present disclosure may be a volatile memory or a non-volatile memory, or may include both a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), and is used as an external cache. By way of examples but of no limitation, many forms of RAM are available, for example, a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synclink dynamic random access memory (SLDRAM), and a direct rambus random access memory (DRRAM). It should be noted that, the memory of the system and the method described in this embodiment of the present disclosure is intended to include but is not limited to these memories and any other suitable type of memory.

It should be understood that, the memory is an example but is not intended for limitation. For example, the memory in the embodiments of the present disclosure may alternatively be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), and the like. That is, the memory described in this embodiment of the present disclosure is intended to include but is not limited to these memories and any other suitable type of memory.

An embodiment of the present disclosure further provides a computer readable storage medium. The computer readable storage medium is configured to store a computer program.

Optionally, the computer readable storage medium may be applied to the network device in the embodiments of the present disclosure, and the computer program enables a computer to execute a corresponding procedure implemented by the network device in the methods of the embodiments of the present disclosure. For brevity, details are not described herein again.

Optionally, the computer readable storage medium may be applied to the mobile terminal/terminal device in the embodiments of the present disclosure, and the computer program enables the computer to execute a corresponding procedure implemented by the mobile terminal/terminal device in the methods of the embodiments of the present disclosure. For brevity, details are not described herein again.

The present disclosure further provides a computer program product. The computer program product includes a computer program instruction.

Optionally, the computer program product may be applied to the network device in the embodiments of the present disclosure, and the computer program instruction enables the computer to execute a corresponding procedure implemented by the network device in the methods of the embodiments of the present disclosure. For brevity, details are not described herein again.

Optionally, the computer program product may be applied to the mobile terminal/terminal device in the embodiments of the present disclosure, and the computer program instruction enables the computer to execute a corresponding procedure implemented by the mobile terminal/terminal device in the methods of the embodiments of the present disclosure. For brevity, details are not described herein again.

The present disclosure further provides a computer program.

Optionally, the computer program may be applied to the network device in the embodiments of the present disclosure, and when run on a computer, the computer program instruction enables the computer to execute a corresponding procedure implemented by the network device in the methods of the embodiments of the present disclosure. For brevity, details are not described herein again.

Optionally, the computer program may be applied to the mobile terminal/terminal device in the embodiments of the present disclosure, and when run on a computer, the computer program instruction enables the computer to execute a corresponding procedure implemented by the mobile terminal/terminal device in the methods of the embodiments of the present disclosure. For brevity, details are not described herein again.

A person of ordinary skill in the art may be aware that, in combination with the examples described in the embodiments disclosed in this specification, units and algorithm steps may be implemented by using electronic hardware or a combination of computer software and electronic hardware. Whether these functions are executed by means of hardware or software depends on specific applications and design constraints of the technical solutions. A person skilled in the art may use different methods to implement the described functions for each particular application, but it should not be considered that the implementation goes beyond the scope of the present disclosure.

A person skilled in the art may clearly understand that, for simple and clear description, for specific work processes of the foregoing described system, apparatus, and unit, reference may be made to corresponding process in the foregoing method embodiments, and details are not described herein again.

In the several embodiments provided in the present disclosure, it should be understood that the disclosed system, apparatus, and method may be implemented in other manners. For example, the apparatus embodiments described above are merely examples. For example, the unit division is merely logical function division, and there may be other division manners in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and the parts displayed as units may or may not be physical units, may be located in one position, or may be distributed on multiple network units. Some of or all of the units may be selected according to actual needs to achieve the objectives of the solutions of the embodiments.

In addition, functional units in the embodiments of the present disclosure may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of the present disclosure essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present disclosure. The foregoing storage medium includes: any medium that can store program code, such as a USB flash drive, a removable hard disk, a read-only memory (ROM), a random access memory (RAM), a magnetic disk, or an optical disc.

Described above are merely specific implementations of the present disclosure, but the protection scope of the present disclosure is not limited thereto. Changes or replacements readily figured out by any person skilled in the art within the technical scope disclosed in the present disclosure shall be covered by the protection scope of the present disclosure. Therefore, the protection scope of the present disclosure shall be subject to the protection scope of the claims.

## Claims

1. A method for wireless communication, **characterized in** comprising:
triggering (S210), by a first terminal, a sidelink buffer state report, BSR, wherein the sidelink BSR is used for requesting a sidelink resource for first sidelink data to be sent, wherein the sidelink BSR is in a pending state, wherein in the pending state the first terminal is ready to send but has not sent the sidelink BSR to a network device; and
determining (S220), by the first terminal when the sidelink BSR is triggered, whether to trigger a scheduling request, SR, used for requesting the sidelink resource according to first information,
wherein the first information comprises:
whether there is uplink data to be sent that conflicts with the SR and a transmission demand of the uplink data that conflicts with the SR;
or,
whether there is second sidelink data to be sent that conflicts with the SR;
or,
whether there is second sidelink data to be sent that conflicts with the SR and a transmission demand of the second sidelink data that conflicts with the SR, and
wherein the triggering the SR used for requesting the sidelink resource comprises prioritizing transmission of the SR over the uplink data to be sent or the second sidelink data to be sent.

2. The method according to claim 1, wherein the method further comprises: sending the SR to the network device.

3. The method according to claim 1 or 2, wherein the first information further comprises: whether the first terminal has an available physical uplink control channel, PUCCH, resource.

4. The method according to claim 1, wherein the determining, by the first terminal, whether to trigger the scheduling request, SR, used for requesting the sidelink resource comprises:
determining, by the first terminal, to trigger the SR, if at least one of following conditions is met:
the first terminal does not have the uplink data to be sent that conflicts with the SR;
the first terminal has the uplink data to be sent that conflicts with the SR, and the transmission demand of the uplink data is lower than the transmission demand of the first sidelink data;
the first terminal does not have third sidelink data to be sent that conflicts with the SR; and
the first terminal has the third sidelink data to be sent that conflicts with the SR, and a transmission demand of the third sidelink data is lower than the transmission demand of the first sidelink data.

5. The method according to claim 4, wherein the transmission demand of the uplink data being lower than the transmission demand of the first sidelink data comprises at least one of following:
a priority of the uplink data is lower than a priority of the first sidelink data;
a quality of service, QoS, requirement of the uplink data is lower than a QoS requirement of the first sidelink data;
the QoS requirement of the uplink data is a QoS requirement in a first QoS requirement set; and
a latency requirement of the uplink data is lower than the latency requirement of the first sidelink data.

6. The method according to claim 5, wherein the first QoS requirement set is pre-configured or configured by a network device.

7. The method according to claim 5, wherein the QoS requirement in the first QoS requirement set is lower than a specific QoS requirement threshold.

8. The method according to any one of claims 4 to 7, wherein the transmission demand of the third sidelink data being lower than the transmission demand of the first sidelink data comprises at least one of following:
a priority of the third sidelink data is lower than the priority of the first sidelink data;
a QoS requirement of the third sidelink data is lower than the QoS requirement of the first sidelink data;
a latency requirement of the third sidelink data is lower than the latency requirement of the first sidelink data; and
the QoS requirement of the third sidelink data is a QoS requirement in a second QoS requirement set.

9. A terminal device, **characterized in** comprising:
a triggering module (310), configured to trigger a sidelink buffer state report, BSR, wherein the sidelink BSR is used for requesting a sidelink resource for first sidelink data to be sent, wherein the sidelink BSR is in a pending state, wherein in the pending state the first terminal is ready to send but has not sent the sidelink BSR to a network device; and
a determining module (320), configured to determine, when the sidelink BSR is triggered, whether to trigger a scheduling request, SR, used for requesting the sidelink resource according to first information,
wherein the first information comprises:
whether there is uplink data to be sent that conflicts with the SR and a transmission demand of the uplink data that conflicts with the SR;
or,
whether there is second sidelink data to be sent that conflicts with the SR;
or,
whether there is second sidelink data to be sent that conflicts with the SR and a transmission demand of the second sidelink data that conflicts with the SR, and
wherein the triggering the SR used for requesting the sidelink resource comprises prioritizing transmission of the SR over the uplink data to be sent or the second sidelink data to be sent.

10. The terminal device according to claim 9, wherein the determining module (320) is further configured to determine to
send the SR to the network device.

11. The terminal device according to claim 9 or 10, wherein the first information further comprises:
whether the terminal device has an available physical uplink control channel, PUCCH, resource.

12. The terminal device according to claim 9, wherein the determining module (320) is specifically configured to:
determine to trigger the SR, if at least one of following conditions is met:
the terminal device does not have the uplink data to be sent that conflicts with the SR;
the terminal device has the uplink data to be sent that conflicts with the SR, and the transmission demand of the uplink data is lower than the transmission demand of the first sidelink data;
the terminal device does not have third sidelink data to be sent that conflicts with the SR; and
the terminal device has the third sidelink data to be sent that conflicts with the SR, and a transmission demand of the third sidelink data is lower than the transmission demand of the first sidelink data.

13. The terminal device according to claim 12, wherein the transmission demand of the uplink data being lower than the transmission demand of the first sidelink data comprises at least one of following:
a priority of the uplink data is lower than a priority of the first sidelink data;
a quality of service, QoS, requirement of the uplink data is lower than a QoS requirement of the first sidelink data;
the QoS requirement of the uplink data is a QoS requirement in a first QoS requirement set; and
a latency requirement of the uplink data is lower than the latency requirement of the first sidelink data.

14. The terminal device according to claim 13, wherein the QoS requirement in the first QoS requirement set is lower than a specific QoS requirement threshold.

15. The terminal device according to any one of claims 9 to 14, wherein the transmission demand of the third sidelink data being lower than the transmission demand of the first sidelink data comprises at least one of following:
a priority of the third sidelink data is lower than the priority of the first sidelink data;
a QoS requirement of the third sidelink data is lower than the QoS requirement of the first sidelink data;
a latency requirement of the third sidelink data is lower than the latency requirement of the first sidelink data;
the QoS requirement of the third sidelink data is a QoS requirement in a second QoS requirement set.

## Patentansprüche

1. Verfahren zur drahtlosen Kommunikation, **dadurch gekennzeichnet, dass** es Folgendes umfasst:
Auslösen (S210), durch ein erstes Endgerät, eines Sidelink-Pufferzustandsberichts, BSR, wobei der Sidelink-BSR verwendet wird zum Anfordern einer Sidelink-Ressource für zu sendende erste Sidelink-Daten, wobei der Sidelink-BSR in einem ausstehenden Zustand ist, wobei das erste Endgerät im ausstehenden Zustand bereit ist, den Sidelink-BSR an eine Netzwerkvorrichtung zu senden, diesen aber nicht gesendet hat; und
Bestimmen (S220), durch das erste Endgerät, wenn der Sidelink-BSR ausgelöst wird, ob eine Planungsanforderung, SR, ausgelöst werden soll, die zum Anfordern der Sidelink-Ressource entsprechend der ersten Information verwendet wird,
wobei die erste Information Folgendes umfasst:
ob es zu sendende Uplink-Daten, die in Konflikt mit der SR sind, und einen Übertragungsbedarf der Uplink-Daten, die in Konflikt mit der SR sind, gibt; oder,
ob es zu sendende zweite Sidelink-Daten gibt, die in Konflikt mit der SR sind; oder,
ob es zu sendende zweite Sidelink-Daten, die in Konflikt mit der SR sind, und einen Übertragungsbedarf der zweiten Sidelink-Daten, die in Konflikt mit der SR sind, gibt, und
wobei das Auslösen der SR, die zum Anfordern der Sidelink-Ressource verwendet wird, Priorisieren der Übertragung der SR vor den zu sendenden Uplink-Daten oder den zu sendenden zweiten Sidelink-Daten umfasst.

2. Verfahren nach Anspruch 1, wobei das Verfahren ferner Folgendes umfasst: Senden der SR an die Netzwerkvorrichtung.

3. Verfahren nach Anspruch 1 oder 2, wobei die erste Information ferner Folgendes umfasst:
ob das erste Endgerät eine verfügbare physische Uplink-Steuerkanal- bzw. PUCCH-Ressource aufweist.

4. Verfahren nach Anspruch 1, wobei das Bestimmen, durch das erste Endgerät, ob die Planungsanforderung, SR, die zum Anfordern der Sidelink-Ressource verwendet wird, ausgelöst werden soll, Folgendes umfasst:
Bestimmen, durch das erste Endgerät, die SR auszulösen, wenn zumindest eine der folgenden Bedingungen erfüllt ist:
das erste Endgerät hat nicht die zu sendenden Uplink-Daten, die in Konflikt mit der SR sind;
das erste Endgerät hat die zu sendenden Uplink-Daten, die in Konflikt mit der SR sind, und der Übertragungsbedarf der Uplink-Daten ist niedriger als der Übertragungsbedarf der ersten Sidelink-Daten;
das erste Endgerät hat nicht die zu sendenden dritten Sidelink-Daten, die in Konflikt mit der SR sind; und das erste Endgerät hat die zu sendenden dritten Sidelink-Daten, die in Konflikt mit der SR sind, und ein Übertragungsbedarf der dritten Sidelink-Daten ist niedriger als der Übertragungsbedarf der ersten Sidelink-Daten.

5. Verfahren nach Anspruch 4, wobei, dass der Übertragungsbedarf der Uplink-Daten niedriger als der Übertragungsbedarf der ersten Sidelink-Daten ist, zumindest eines aus Folgendem umfasst:
eine Priorität der Uplink-Daten ist niedriger als eine Priorität der ersten Sidelink-Daten;
eine Dienstgüte- bzw. QoS-Anforderung der Uplink-Daten ist niedriger als eine QoS-Anforderung der ersten Sidelink-Daten;
die QoS-Anforderung der Uplink-Daten ist eine QoS-Anforderung in einem ersten QoS-Anforderungssatz; und
eine Latenzanforderung der Uplink-Daten ist niedriger als die Latenzanforderung der ersten Sidelink-Daten.

6. Verfahren nach Anspruch 5, wobei der erste QoS-Anforderungssatz durch eine Netzwerkvorrichtung vorkonfiguriert oder konfiguriert ist.

7. Verfahren nach Anspruch 5, wobei die QoS-Anforderung im ersten QoS-Anforderungssatz niedriger als eine spezifische QoS-Anforderungsschwelle ist.

8. Verfahren nach einem der Ansprüche 4 bis 7, wobei, dass der Übertragungsbedarf der dritten Sidelink-Daten niedriger als der Übertragungsbedarf der ersten Sidelink-Daten ist, zumindest eines aus Folgendem umfasst:
eine Priorität der dritten Sidelink-Daten ist niedriger als die Priorität der ersten Sidelink-Daten;
eine QoS-Anforderung der dritten Sidelink-Daten ist niedriger als die QoS-Anforderung der ersten Sidelink-Daten;
eine Latenzanforderung der dritten Sidelink-Daten ist niedriger als die Latenzanforderung der ersten Sidelink-Daten; und
die QoS-Anforderung der dritten Sidelink-Daten ist eine QoS-Anforderung in einem zweiten QoS-Anforderungssatz.

9. Endgerätvorrichtung, **dadurch gekennzeichnet, dass** es Folgendes umfasst:
ein Auslösemodul (310), ausgelegt zum Auslösen eines Sidelink-Pufferzustandsberichts, BSR, wobei der Sidelink-BSR verwendet wird zum Anfordern einer Sidelink-Ressource für erste zu sendende Sidelink-Daten, wobei der Sidelink-BSR in einem ausstehenden Zustand ist, wobei das erste Endgerät im ausstehenden Zustand bereit ist, den Sidelink-BSR an eine Netzwerkvorrichtung zu senden, diesen aber nicht gesendet hat; und
ein Bestimmungsmodul (320), ausgelegt zum Bestimmen, wenn der Sidelink-BSR ausgelöst wird, ob eine Planungsanforderung, SR, ausgelöst werden soll, die zum Anfordern der Sidelink-Ressource entsprechend der ersten Information verwendet wird,
wobei die erste Information Folgendes umfasst:
ob es zu sendende Uplink-Daten, die in Konflikt mit der SR sind, und einen Übertragungsbedarf der Uplink-Daten, die in Konflikt mit der SR sind, gibt; oder,
ob es zu sendende zweite Sidelink-Daten gibt, die in Konflikt mit der SR sind; oder,
ob es zu sendende zweite Sidelink-Daten, die in Konflikt mit der SR sind, und einen Übertragungsbedarf der zweiten Sidelink-Daten, die in Konflikt mit der SR sind, gibt, und
wobei das Auslösen der SR, die zum Anfordern der Sidelink-Ressource verwendet wird, Priorisieren der Übertragung der SR vor den zu sendenden Uplink-Daten oder den zu sendenden zweiten Sidelink-Daten umfasst.

10. Endgerätvorrichtung nach Anspruch 9, wobei das Bestimmungsmodul (320) ferner ausgelegt ist zum Bestimmen, die SR an die Netzwerkvorrichtung zu senden.

11. Endgerätvorrichtung nach Anspruch 9 oder 10, wobei die erste Information ferner Folgendes umfasst:
ob die Endgerätvorrichtung eine verfügbare physische Uplink-Steuerkanal- bzw. PUCCH-Ressource aufweist.

12. Endgerätvorrichtung nach Anspruch 9, wobei das Bestimmungsmodul (320) speziell ausgelegt ist zum:
Bestimmen, die SR auszulösen, wenn zumindest eine der folgenden Bedingungen erfüllt ist:
die Endgerätvorrichtung hat nicht die zu sendenden Uplink-Daten, die in Konflikt mit der SR sind;
die Endgerätvorrichtung hat die zu sendenden Uplink-Daten, die in Konflikt mit der SR sind, und der Übertragungsbedarf der Uplink-Daten ist niedriger als der Übertragungsbedarf der ersten Sidelink-Daten;
die Endgerätvorrichtung hat nicht die zu sendenden dritten Sidelink-Daten, die in Konflikt mit der SR sind; und
die Endgerätvorrichtung hat die zu sendenden dritten Sidelink-Daten, die in Konflikt mit der SR sind, und ein Übertragungsbedarf der dritten Sidelink-Daten ist niedriger als der Übertragungsbedarf der ersten Sidelink-Daten.

13. Endgerätvorrichtung nach Anspruch 12, wobei, dass der Übertragungsbedarf der Uplink-Daten niedriger als der Übertragungsbedarf der ersten Sidelink-Daten ist, zumindest eines aus Folgendem umfasst:
eine Priorität der Uplink-Daten ist niedriger als eine Priorität der ersten Sidelink-Daten;
eine Dienstgüte- bzw. QoS-Anforderung der Uplink-Daten ist niedriger als eine QoS-Anforderung der ersten Sidelink-Daten;
die QoS-Anforderung der Uplink-Daten ist eine QoS-Anforderung in einem ersten QoS-Anforderungssatz; und
eine Latenzanforderung der Uplink-Daten ist niedriger als die Latenzanforderung der ersten Sidelink-Daten.

14. Endgerätvorrichtung nach Anspruch 13, wobei die QoS-Anforderung im ersten QoS-Anforderungssatz niedriger als eine spezifische QoS-Anforderungsschwelle ist.

15. Endgerätvorrichtung nach einem der Ansprüche 9 bis 14, wobei, dass der Übertragungsbedarf der dritten Sidelink-Daten niedriger als der Übertragungsbedarf der ersten Sidelink-Daten ist, zumindest eines aus Folgendem umfasst:
eine Priorität der dritten Sidelink-Daten ist niedriger als die Priorität der ersten Sidelink-Daten;
eine QoS-Anforderung der dritten Sidelink-Daten ist niedriger als die QoS-Anforderung der ersten Sidelink-Daten;
eine Latenzanforderung der dritten Sidelink-Daten ist niedriger als die Latenzanforderung der ersten Sidelink-Daten;
die QoS-Anforderung der dritten Sidelink-Daten ist eine QoS-Anforderung in einem zweiten QoS-Anforderungssatz.

## Revendications

1. Procédé pour communication sans fil, **caractérisé en ce qu'**il comprend :
le déclenchement (S210), par un premier terminal, d'un rapport d'état de tampon, BSR, de liaison latérale dans lequel le BSR de liaison latérale est utilisé pour demander une ressource de liaison latérale pour des premières données de liaison latérale destinées à être envoyées, dans lequel le BSR de liaison latérale est dans un état en instance, dans lequel, dans l'état en instance, le premier terminal est prêt à envoyer mais n'a pas envoyé le BSR de liaison latérale à un dispositif de réseau ; et
la détermination (S220), par le premier terminal, lorsque le BSR de liaison latérale est déclenché, du fait qu'il faut ou non déclencher une demande d'ordonnancement, SR, utilisée pour demander la ressource de liaison latérale selon des premières informations,
dans lequel les premières informations comprennent :
le fait qu'il y a ou non des données de liaison montante destinées à être envoyées qui sont en conflit avec la SR et une exigence de transmission des données de liaison montante qui sont en conflit avec la SR ;
ou,
le fait qu'il y a ou non des deuxièmes données de liaison latérale destinées à être envoyées qui sont en conflit avec la SR ;
ou,
le fait qu'il y a ou non des deuxièmes données de liaison latérale destinées à être envoyées qui sont en conflit avec la SR et une exigence de transmission des deuxièmes données de liaison latérale qui sont en conflit avec la SR, et
dans lequel le déclenchement de la SR utilisée pour demander la ressource de liaison latérale comprend la priorisation de transmission de la SR par rapport aux données de liaison montante destinées à être envoyées ou aux deuxièmes données de liaison latérale destinées à être envoyées.

2. Procédé selon la revendication 1, dans lequel le procédé comprend en outre :
l'envoi de la SR au dispositif de réseau.

3. Procédé selon la revendication 1 ou 2, dans lequel les premières informations comprennent en outre :
le fait que le premier terminal a ou non une ressource de canal de commande de liaison montante physique, PUCCH, disponible.

4. Procédé selon la revendication 1, dans lequel la détermination, par le premier terminal, du fait qu'il faut ou non déclencher la demande d'ordonnancement, SR, utilisée pour demander la ressource de liaison latérale comprend :
la détermination, par le premier terminal, de déclencher la SR, si au moins une des conditions suivantes est respectée :
le premier terminal n'a pas les données de liaison montante destinées à être envoyées qui sont en conflit avec la SR ;
le premier terminal a les données de liaison montante destinées à être envoyées qui sont en conflit avec la SR,
et l'exigence de transmission des données de liaison montante est inférieure à l'exigence de transmission des premières données de liaison latérale ;
le premier terminal n'a pas de troisièmes données de liaison latérale destinées à être envoyées qui sont en conflit avec la SR ; et
le premier terminal a les troisièmes données de liaison latérale destinées à être envoyées qui sont en conflit avec la SR, et une exigence de transmission des troisièmes données de liaison latérale est inférieure à l'exigence de transmission des premières données de liaison latérale.

5. Procédé selon la revendication 4, dans lequel l'exigence de transmission des données de liaison montante étant inférieure à l'exigence de transmission des premières données de liaison latérale comprend au moins un de ce qui suit :
une priorité des données de liaison montante est inférieure à une priorité des premières données de liaison latérale ;
une nécessité de qualité de service, QoS, des données de liaison montante est inférieure à une nécessité de QoS des premières données de liaison latérale ;
la nécessité de QoS des données de liaison montante est une nécessité de QoS dans un premier ensemble de nécessités de QoS ; et
une nécessité de latence des données de liaison montante est inférieure à la nécessité de latence des premières données de liaison latérale.

6. Procédé selon la revendication 5, dans lequel le premier ensemble de nécessités de QoS est préconfiguré ou configuré par un dispositif de réseau.

7. Procédé selon la revendication 5, dans lequel la nécessité de QoS dans le premier ensemble de nécessités de QoS est inférieure à un seuil de nécessité de QoS spécifique.

8. Procédé selon l'une quelconque des revendications 4 à 7, dans lequel l'exigence de transmission des troisièmes données de liaison latérale étant inférieure à l'exigence de transmission des premières données de liaison latérale comprend au moins un de ce qui suit :
une priorité des troisièmes données de liaison latérale est inférieure à la priorité des premières données de liaison latérale ;
une nécessité de QoS des troisièmes données de liaison latérale est inférieure à la nécessité de QoS des premières données de liaison latérale ;
une nécessité de latence des troisièmes données de liaison latérale est inférieure à la nécessité de latence des premières données de liaison latérale ; et
la nécessité de QoS des troisièmes données de liaison latérale est une nécessité de QoS dans un second ensemble de nécessités de QoS.

9. Dispositif de terminal, **caractérisé en ce qu'**il comprend :
un module de déclenchement (310), configuré pour déclencher un rapport d'état de tampon, BSR, de liaison latérale, dans lequel le BSR de liaison latérale est utilisé pour demander une ressource de liaison latérale pour des premières données de liaison latérale destinées à être envoyées, dans lequel le BSR de liaison latérale est dans un état en instance, dans lequel, dans l'état en instance, le premier terminal est prêt à envoyer mais n'a pas envoyé le BSR de liaison latérale à un dispositif de réseau ; et
un module de détermination (320), configuré pour déterminer, lorsque le BSR de liaison latérale est déclenché, le fait qu'il faut ou non déclencher une demande d'ordonnancement, SR, utilisée pour demander la ressource de liaison latérale selon des premières informations,
dans lequel les premières informations comprennent :
le fait qu'il y a ou non des données de liaison montante destinées à être envoyées qui sont en conflit avec la SR et une exigence de transmission des données de liaison montante qui sont en conflit avec la SR ;
ou,
le fait qu'il y a ou non des deuxièmes données de liaison latérale destinées à être envoyées qui sont en conflit avec la SR ;
ou,
le fait qu'il y a ou non des deuxièmes données de liaison latérale destinées à être envoyées qui sont en conflit avec la SR et une exigence de transmission des deuxièmes données de liaison latérale qui sont en conflit avec la SR, et
dans lequel le déclenchement de la SR utilisée pour demander la ressource de liaison latérale comprend la priorisation de transmission de la SR par rapport aux données de liaison montante destinées à être envoyées ou aux deuxièmes données de liaison latérale destinées à être envoyées.

10. Dispositif de terminal selon la revendication 9, dans lequel le module de détermination (320) est en outre configuré pour déterminer d'envoyer la SR au dispositif de réseau.

11. Dispositif de terminal selon la revendication 9 ou 10, dans lequel les premières informations comprennent en outre :
le fait que le dispositif de terminal a ou non une ressource de canal de commande de liaison montante physique, PUCCH, disponible.

12. Dispositif de terminal selon la revendication 9, dans lequel le module de détermination (320) est spécifiquement configuré pour :
déterminer de déclencher la SR, si au moins une des conditions suivantes est respectée :
le dispositif de terminal n'a pas les données de liaison montante destinées à être envoyées qui sont en conflit avec la SR ;
le dispositif de terminal a les données de liaison montante destinées à être envoyées qui sont en conflit avec la SR, et l'exigence de transmission des données de liaison montante est inférieure à l'exigence de transmission des premières données de liaison latérale ;
le dispositif de terminal n'a pas de troisièmes données de liaison latérale destinées à être envoyées qui sont en conflit avec la SR ; et
le dispositif de terminal a les troisièmes données de liaison latérale destinées à être envoyées qui sont en conflit avec la SR, et une exigence de transmission des troisièmes données de liaison latérale est inférieure à l'exigence de transmission des premières données de liaison latérale.

13. Dispositif de terminal selon la revendication 12, dans lequel l'exigence de transmission des données de liaison montante étant inférieure à l'exigence de transmission des premières données de liaison latérale comprend au moins un de ce qui suit :
une priorité des données de liaison montante est inférieure à une priorité des premières données de liaison latérale ;
une nécessité de qualité de service, QoS, des données de liaison montante est inférieure à une nécessité de QoS des premières données de liaison latérale ;
la nécessité de QoS des données de liaison montante est une nécessité de QoS dans un premier ensemble de nécessités de QoS ; et
une nécessité de latence des données de liaison montante est inférieure à la nécessité de latence des premières données de liaison latérale.

14. Dispositif de terminal selon la revendication 13, dans lequel la nécessité de QoS dans le premier ensemble de nécessités de QoS est inférieure à un seuil de nécessité de QoS spécifique.

15. Dispositif de terminal selon l'une quelconque des revendications 9 à 14, dans lequel l'exigence de transmission des troisièmes données de liaison latérale étant inférieure à l'exigence de transmission des premières données de liaison latérale comprend au moins un de ce qui suit :
une priorité des troisièmes données de liaison latérale est inférieure à la priorité des premières données de liaison latérale ;
une nécessité de QoS des troisièmes données de liaison latérale est inférieure à la nécessité de QoS des premières données de liaison latérale ;
une nécessité de latence des troisièmes données de liaison latérale est inférieure à la nécessité de latence des premières données de liaison latérale ;
la nécessité de QoS des troisièmes données de liaison latérale est une nécessité de QoS dans un second ensemble de nécessités de QoS.
